# EUROPEAN PATENT APPLICATION

(11) **EP 4 644 925 A1**
(43) Date of publication of application: **05.11.2025**
(21) Application number: 24905158.2
(22) Date of filing: 31.07.2024
(51) Int. Cl.: G01R 31/364, G01M 3/02

(54) **FLOATING PLUG-IN APPARATUS, AIR TIGHTNESS DETECTION DEVICE, AND AIR TIGHTNESS DETECTION METHOD**

(30) Priority: 15.01.2024 CN 202410055009
(71) Applicant: Contemporary Amperex Technology Co., Limited, Ningde, Fujian 352100 (CN)
(72) Inventor: ZHU, Zhiqin, Ningde, Fujian 352100 (CN); WANG, Jiacai, Ningde, Fujian 352100 (CN)
(74) Representative: Gong, Jinping
(86) International application number: PCT/CN2024/108942
(87) International publication number: WO 2025/152389

(57) **Abstract**

The present application relates to the technical field of batteries and provides a floating docking apparatus, an air tightness detection device, and an air tightness detection method. The floating docking apparatus includes a guide assembly and a first floating adjustment mechanism. The guide assembly includes a first guiding member and a second guiding member. The first floating adjustment mechanism includes: a first floating member extending along a first direction, where the first guiding member and the second guiding member are disposed on both ends of the first floating member opposite to each other in the first direction, respectively; and a first floating adjustment assembly, where the first floating adjustment assembly is connected to the first floating member and is configured to drive the first floating member to adjust a position along the first direction. The technical problem to be solved is to alleviate, mitigate, or eliminate the risk of side leakage when a plug mechanism of the docking apparatus docks with a communication port of a cooling member, as well as the issue of the susceptibility of the plug mechanism to damage. The technical effect is to use the first floating adjustment mechanism for rough positioning along the first direction, which allows for automatic correction along the first direction, thereby mitigating the problem caused by docking

## Description

### CROSS-REFERENCE TO RELATED APPLICATION

The present application refers to Chinese patent application No. 202410055009.6, entitled "FLOATING DOCKING APPARATUS, AIR TIGHTNESS DETECTION DEVICE, AND AIR TIGHTNESS DETECTION METHOD", filed on January 15, 2024, which is incorporated herein by reference in its entirety.

### TECHNICAL FIELD

The present application relates to the technical field of batteries, and in particular, to a floating docking apparatus, an air tightness detection device, and an air tightness detection method.

### BACKGROUND

The air tightness of the cooling member (e.g., water-cooling plate), as an element for cooling battery modules, is a critical factor influencing the safety and reliability of battery modules. Therefore, detecting the air tightness of the cooling member is inevitably an important process in the production of battery modules.

During the detection process, the internal space of the cooling member is often inflated via the communication port of the cooling member, and after stabilization, the pressure change in the internal space over a preset period is detected.

However, a series of problems, such as side leakage and susceptibility of the plug mechanism to damage, may arise when the plug mechanism of the docking apparatus of the air tightness detection device docks with the communication port of the cooling member.

### SUMMARY

In view of the problems described above, the present application provides a floating docking apparatus, an air tightness detection device, and an air tightness detection method, which aim to alleviate, mitigate, or eliminate the risk of side leakage when a plug mechanism of a docking apparatus of an air tightness detection device docks with a communication port of a cooling member, as well as the issue of the susceptibility of the plug mechanism to damage.

In a first aspect, the present application provides a floating docking apparatus. The floating docking apparatus is applied to a cooling member. The floating docking apparatus includes: a guide assembly and a first floating adjustment mechanism. The guide assembly includes a first guiding member and a second guiding member, where the first guiding member and the second guiding member are disposed opposite to each other in a first direction for receiving one end of the cooling plate cooling member in a second direction and positioning a communication port of the cooling member, and the second direction intersects with the first direction. The first floating adjustment mechanism includes a first floating member and a first floating adjustment assembly; the first floating member extends along the first direction, and the first guiding member and the second guiding member are disposed on both ends of the first floating member opposite to each other in the first direction, respectively; the first floating adjustment assembly is connected to the first floating member and is configured to drive the first floating member to adjust a position along the first direction.

In the technical solution of the embodiments of the present application, configuring the first floating adjustment assembly to be connected to the first floating member can drive the first guiding member and the second guiding member, which are disposed on the first floating member and configured to receive one end of the cooling member in the second direction, to adjust the position along the first direction. With this design, the shape of the cooling member may serve as a guide to enable rough positioning along the first direction using the first floating adjustment mechanism, which allows automatic correction along the first direction, thereby alleviating the risk of side leakage caused by docking and the issue of the susceptibility of the plug mechanism to damage.

In some embodiments, the first floating adjustment assembly includes: a first guide rail extending along the first direction; and a first sliding table in sliding fit with the first guide rail, where one of the first guide rail and the first sliding table is configured to be fixedly connected to the first floating member. Configuring the first sliding table and the first guide rail that are in sliding fit with each other allows the first floating member to adjust the position along the first direction.

In some embodiments, the first floating adjustment assembly further includes: a first elastic member, disposed on the first floating member and configured to apply a return elastic force to the first floating member under the condition that the first floating member slides on the first guide rail via the first sliding table. Configuring the first elastic member allows the elastic force of the first elastic member to drive the resetting of the first floating member.

In some embodiments, the floating docking apparatus further includes a second floating adjustment mechanism. The second floating adjustment mechanism includes: a second floating member and a second floating adjustment assembly. The other of the first guide rail and the first sliding table is disposed on the second floating member; the second floating adjustment assembly is connected to the second floating member and is configured to drive the second floating member to adjust the position along the second direction. Configuring the second floating adjustment assembly to be connected to the second floating member can drive the first guiding member and the second guiding member to adjust the position along the second direction. With this design, the shape of the cooling member may serve as the guide to enable rough positioning along the second direction using the second floating adjustment mechanism, which allows automatic correction along the second direction.

In some embodiments, the second floating adjustment assembly includes: a second guide rail extending along the second direction; and a second sliding table in sliding fit with the second guide rail, where one of the second guide rail and the second sliding table is configured to be fixedly connected to the second floating member. Configuring the second sliding table and the second guide rail that are in sliding fit with each other allows the second floating member to adjust the position along the second direction.

In some embodiments, the second floating adjustment assembly further includes: a second elastic member. The second elastic member is disposed on the second floating member and is configured to apply a return elastic force to the second floating member under the condition that the second floating member slides on the second guide rail via the second sliding table. Configuring the second elastic member allows the elastic force of the second elastic member to drive the resetting of the second floating member.

In some embodiments, the first floating adjustment assembly further includes: a third guide rail extending along the first direction and spaced apart from the first guide rail in the first direction; and a third sliding table in sliding fit with the third guide rail and spaced apart from the first sliding table in the first direction, where one of the third guide rail and the third sliding table is configured to be fixedly connected to the first floating member. Configuring the additional third sliding table and third guide rail that are in sliding fit with each other allows the first floating member to adjust the position along the first direction in a more stable manner.

In some embodiments, the first floating adjustment assembly further includes: a third elastic member. The first elastic member and the third elastic member are disposed on the first floating member in a spaced manner along the first direction and are configured to apply a return elastic force to the first floating member under the condition that the first floating member slides on the first guide rail and the third guide rail via the first sliding table and the third sliding table, respectively. Configuring the additional third elastic member allows the elastic force of the third elastic member to drive the resetting of the first floating member, such that the first floating member can receive the return elastic force when performing the positional adjustment in the positive or negative direction along the first direction.

In some embodiments, the second floating adjustment mechanism further includes: a fourth guide rail extending along the second direction and spaced apart from the second guide rail in the first direction; and a fourth sliding table in sliding fit with the fourth guide rail and spaced apart from the second sliding table in the first direction, where one of the fourth guide rail and the fourth sliding table is configured to be fixedly connected to the second floating member. Configuring the additional fourth sliding table and fourth guide rail that are in sliding fit with each other allows the second floating member to adjust the position along the second direction in a more stable manner.

In some embodiments, the second floating adjustment assembly further includes: a fourth elastic member. The second elastic member and the fourth elastic member are disposed on the second floating member in a spaced manner along the first direction and are configured to apply a return elastic force to the second floating member under the condition that the second floating member slides on the second guide rail and the fourth guide rail via the second sliding table and the fourth sliding table, respectively. Configuring the additional fourth elastic member allows the elastic force of the fourth elastic member to drive the resetting of the second floating member, such that the second floating member can receive the balanced return elastic force on both sides when performing positional adjustment along the second direction.

In some embodiments, the floating docking apparatus further includes a first movement adjustment mechanism and a first driving mechanism. The first movement adjustment mechanism includes a first moving member and a first movement adjustment assembly; the other of the second guide rail and the second sliding table and/or the other of the fourth guide rail and the fourth sliding table are disposed on the first moving member; the first movement adjustment assembly is connected to the first moving member and is configured to drive the first moving member to adjust the position along the second direction. The first driving mechanism is configured to be connected to the first moving member so as to drive the first moving member to translate along the second direction. Configuring the first movement adjustment assembly to be connected to the first moving member can drive the first guiding member and the second guiding member to adjust the position along the second direction. With this design, the first driving mechanism can drive the first moving member to translate along the second direction, which allows the first guiding member and the second guiding member to rapidly move toward the cooling member along the second direction, thereby facilitating subsequent rough positioning along the first direction and the second direction.

In some embodiments, the first movement adjustment assembly includes: a fifth guide rail extending along the second direction; and a fifth sliding table in sliding fit with the fifth guide rail, where one of the fifth guide rail and the fifth sliding table is configured to be fixedly connected to the first moving member. Configuring the fifth sliding table and the fifth guide rail that are in sliding fit with each other allows the first moving member to adjust the position along the second direction.

In some embodiments, the first driving mechanism includes a cylinder, and the cylinder is provided with a guide rod, where the first moving member includes a groove for engaging with a head of the guide rod so as to drive the first moving member to translate along the second direction under the condition that the guide rod extends or retracts. By providing the groove on the first moving member for engaging with the head of the guide rod, this shape-fitting engagement mode allows the motion of the guide rod to drive the first moving member to translate along the second direction, thereby driving the first guiding member and the second guiding member to translate along the second direction.

In some embodiments, the floating docking apparatus further includes a second movement adjustment mechanism. The second movement adjustment mechanism includes: a second moving member and a second movement adjustment assembly. The first driving mechanism and the other of the fifth guide rail and the fifth sliding table are disposed on the second moving member; the second movement adjustment assembly is connected to the second moving member and is configured to drive the second moving member to adjust the position along the first direction. Configuring the second movement adjustment assembly to be connected to the second moving member can drive the second moving member to adjust the position along the first direction. With this design, the first guiding member and the second guiding member can rapidly move toward the cooling member along the first direction, thereby facilitating further movement toward the cooling member along the second direction.

In some embodiments, the second movement adjustment assembly includes: a sixth guide rail extending along the first direction; and a sixth sliding table in sliding fit with the sixth guide rail, where the sixth sliding table is configured to be fixedly connected to the second moving member. Configuring the sixth sliding table and the sixth guide rail that are in sliding fit with each other allows the second moving member to adjust the position along the first direction.

In some embodiments, a first stopping member is disposed on the second moving member, and a second stopping member is disposed on the sixth guide rail, where the first stopping member is configured to cooperate with the second stopping member to limit the motion position of the sixth sliding table. With this design, the second moving member can adjust the position along the first direction and then be fixed.

In some embodiments, the floating docking apparatus further includes: a plug mechanism, configured to dock with the communication port, where the plug mechanism is movably connected to the first floating member to enable the positional adjustment of the plug mechanism relative to the first floating member along a third direction. The third direction intersects with the first direction and the second direction, respectively. With this design, the plug mechanism can adjust the position along the third direction after the rough positioning along the first direction and the second direction, so as to achieve the docking with the communication port of the cooling member.

In some embodiments, the first guiding member includes a first side wall facing the second guiding member and a second side wall facing away from the second guiding member, the first side wall includes a first inclined portion inclined relative to the second side wall, and the spacing between the first inclined portion and the second side wall in the first direction gradually decreases in a direction away from the floating docking apparatus along the second direction. Additionally/alternatively, the second guiding member includes a third side wall facing the first guiding member and a fourth side wall facing away from the first guiding member, the third side wall includes a second inclined portion inclined relative to the fourth side wall, and the spacing between the second inclined portion and the fourth side wall in the first direction gradually decreases in the direction away from the floating docking apparatus along the second direction. By configuring the portion of the first guiding member and/or the second guiding member for receiving the cooling member to include an inclined portion, the likelihood of hard collisions occurring when the first guiding member and/or the second guiding member receive the cooling member can be reduced.

In a second aspect, the present application provides an air tightness detection device, which includes: a fixed support; and the floating docking apparatus according to the above embodiments. The floating docking apparatus is disposed on the fixed support.

Such an air tightness detection device is capable of providing the advantages described above with respect to the floating docking apparatus, which will not be described again for the sake of brevity.

In some embodiments, the air tightness detection device further includes a heat preservation mechanism. The heat preservation mechanism includes: a heat preservation cover, configured to cover the communication port of the cooling member and the plug mechanism; and a lifting assembly, disposed on the fixed support and fixedly connected to the heat preservation cover for lifting and lowering the heat preservation cover. The arrangement of the heat preservation mechanism can ensure that the heat preservation cover automatically descends when the cooling member enters the device, thereby increasing the likelihood that the air tightness testing process is not affected by external airflow changes, and automatically ascends after the testing is completed.

In a third aspect, the present application provides an air tightness detection method. The method includes: receiving one end of a cooling member in a second direction through a first guiding member and a second guiding member of a floating docking apparatus, where the first guiding member and the second guiding member are disposed opposite to each other in a first direction, and the second direction intersects with the first direction; docking a plug mechanism of the floating docking apparatus with a communication port of the cooling member; inflating an internal space of the cooling member via the communication port of the cooling member; and detecting the pressure change in the internal space over a preset period.

Such an air tightness detection method is capable of providing the advantages described above with respect to the floating docking apparatus, which will not be described again for the sake of brevity.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions in the embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of a floating docking apparatus according to some embodiments of the present application;
FIG. 2 is a schematic structural diagram of the cooperation between a floating docking apparatus and a cooling member according to some embodiments of the present application;
FIG. 3 is a schematic structural diagram of a floating docking apparatus from another angle according to some embodiments of the present application;
FIG. 4 is a schematic cross-sectional view of a plug mechanism according to some embodiments of the present application;
FIG. 5 is a schematic structural diagram of an air tightness detection device according to some embodiments of the present application;
FIG. 6 is a schematic structural diagram of a heat preservation mechanism according to some embodiments of the present application; and
FIG. 7 is a flowchart of an air tightness detection method according to some embodiments of the present application.

Reference numerals in the detailed description are as follows:
first direction X; second direction Y; third direction Z;
floating docking apparatus 100; first guiding member 110; second guiding member 120; first floating member 130; first floating adjustment assembly 140; first guide rail 150; first sliding table 160; first elastic member 170; second floating member 180; second floating adjustment assembly 190;
cooling member 200; second guide rail 210; second sliding table 220; second elastic member 230; third guide rail 240; third sliding table 250; third elastic member 260; fourth guide rail 270; fourth sliding table 280; fourth elastic member 290;
first moving member 300; first movement adjustment assembly 310; first driving mechanism 320; fifth guide rail 330; fifth sliding table 340; second inclined portion 345; cylinder 350; first inclined portion 355; guide rod 360; second stopping member 365; groove 370; first stopping member 375; second moving member 380; sixth guide rail 385; second movement adjustment assembly 390; sixth sliding table 395;
plug mechanism 400; communication port guiding sleeve 410; spring 420; plugging cylinder 430;
air tightness detection device 500; fixed support 510;
heat preservation mechanism 600; heat preservation cover 610; lifting assembly 620.

### DETAILED DESCRIPTION

Embodiments of the technical solutions of the present application will be described in detail below with reference to the drawings. The following embodiments are only for illustrating the technical solutions of the present application more clearly, and therefore are only exemplary and do not limit the protection scope of the present application.

Unless otherwise defined, all technical and scientific terms used herein have the same meaning as commonly understood by those skilled in the technical field to which the present application belongs. The terms used herein are only for illustrating the specific embodiments, rather than limiting the present application. The terms "include", "comprise" and "provided with", and any variations thereof in the specification and claims of the present application and the above-mentioned drawing description encompass non-exclusive inclusions.

In the description of the embodiments of the present application, technical terms such as "first", "second", and the like are only used to distinguish different objects and should not be interpreted as indicating or implying the relative importance or implicitly indicating the number, specific order, or primary and secondary relationship of the indicated technical features. In the description of the embodiments of the present application, unless otherwise specifically defined, "a plurality of" means two or more than two.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "a plurality of" refers to more than two (including two). Similarly, "multiple groups" refers to more than two groups (including two groups), and "multiple pieces" refers to more than two pieces (including two pieces).

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like indicating directional or positional relationships are based on the directional or positional relationships shown in the drawings. They are merely for the convenience of describing the embodiments of the present application and simplifying the description, and are not intended to indicate or imply that the devices or elements referred to must have specific directions, be constructed, and operated in specific directions. Therefore, these terms should not be construed as limitations on the embodiments of the present application.

In the description of the embodiments of the present application, unless otherwise clearly specified and defined, the technical terms "install", "interconnect", "connect", "fix", and the like should be interpreted in their broad senses. For example, "connect" may be "fixedly connect", "detachably connect", or "integrally connect"; "mechanically connect" or "electrically connect"; or "directly interconnect", "indirectly interconnect through an intermediate", "communication between interiors of two elements", or "interaction between two elements". For those of ordinary skill in the art, the specific meanings of the above terms in the embodiments of the present application can be interpreted according to the specific condition.

In the description of the embodiments of the present application, flowcharts are used to illustrate the operations performed by the system according to the embodiments of the present disclosure. It should be understood that the preceding or following operations are not necessarily performed in a strictly sequential order. Rather, the steps may be processed in reverse order or simultaneously. Meanwhile, other operations may be added to these processes, or one or several steps may be removed from these processes.

Currently, detecting the air tightness of the cooling member (e.g., water-cooling plate) is an important process in the production of battery modules.

To inflate the internal space of the cooling member via the communication port of the cooling member, the plug mechanism of the docking apparatus of the air tightness detection device is usually used to dock with the communication port of the cooling member. Due to potential relative positional errors between the communication port and the plug mechanism, side leakage may easily occur during the insertion process, and the plug mechanism may even become damaged.

To alleviate, mitigate, or eliminate the risk of side leakage when the plug mechanism of the docking apparatus of the air tightness detection device docks with the communication port of the cooling member, as well as the issue of the susceptibility of the plug mechanism to damage, a first floating adjustment assembly may be configured to be connected to a first floating member. This allows to drive a first guiding member and a second guiding member, which are disposed on the first floating member and configured to receive one end of the cooling member in the second direction, to adjust the position along the first direction. With this design, the shape of the cooling member may serve as a guide to enable rough positioning along the first direction using the first floating adjustment mechanism, which allows automatic correction along the first direction.

In view of the above consideration, a floating docking apparatus for the cooling member has been designed. In the solution, the first floating adjustment assembly is configured to be connected to the first floating member, so as to alleviate, mitigate, or eliminate the risk of side leakage when the plug mechanism of the docking apparatus of the air tightness detection device docks with the communication port of the cooling member, as well as the issue of the susceptibility of the plug mechanism to damage.

The floating docking apparatus disclosed in the embodiments of the present application may be configured to detect the air tightness of the cooling member (e.g., the water-cooling plate) of the battery. The air tightness detection device provided with the floating docking apparatus disclosed in the present application may be used.

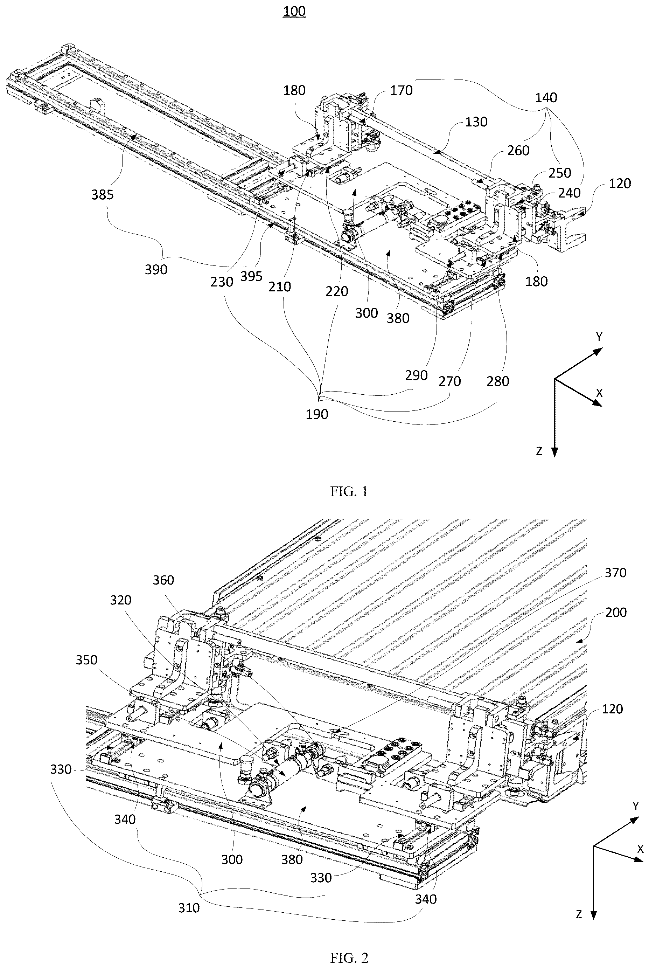

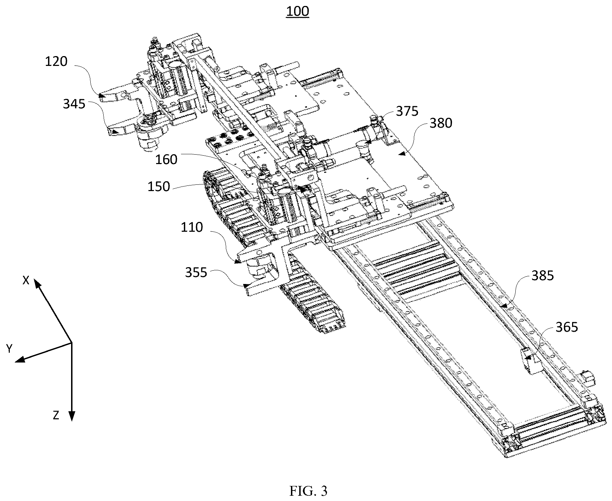

Referring to FIG. 1 and further referring to FIGs. 2 to 3, FIG. 1 is a schematic structural diagram of a floating docking apparatus 100 according to some embodiments of the present application; FIG. 2 is a schematic structural diagram of the cooperation between a floating docking apparatus 100 and a cooling member 200 according to some embodiments of the present application; FIG. 3 is a schematic structural diagram of a floating docking apparatus 100 from another angle according to some embodiments of the present application. The floating docking apparatus 100 is applied to the cooling member 200. The floating docking apparatus 100 includes a guide assembly and a first floating adjustment mechanism. The guide assembly includes a first guiding member 110 and a second guiding member 120. The first guiding member 110 and the second guiding member 120 are disposed opposite to each other in the first direction X for receiving one end of the cooling member 200 in the second direction Y and positioning the communication port of the cooling member 200. The second direction Y intersects with the first direction X. The first floating adjustment mechanism includes a first floating member 130 and a first floating adjustment assembly 140. The first floating member 130 extends along the first direction X, and the first guiding member 110 and the second guiding member 120 are disposed on both ends of the first floating member 130 opposite to each other in the first direction X, respectively. In addition, the first floating adjustment assembly 140 is connected to the first floating member 130 and is configured to drive the first floating member 130 to adjust the position along the first direction X.

As shown in the figure, the first direction X is the width direction of the cooling member 200, and the second direction Y is the length direction of the cooling member 200.

As shown in FIGs. 1 to 3, to position the communication port of the cooling member 200, the first guiding member 110 and the second guiding member 120 are disposed at both ends of the first floating member 130. In the example shown in FIGs. 1 to 3, the first floating member 130 is connected to the first guiding member 110 and the second guiding member 120 through some plate members. In some embodiments, the first guiding member 110 and the second guiding member 120 may also be directly mounted at both ends of the first floating member 130. In the example shown in FIGs. 1 to 3, the first guiding member 110 and/or the second guiding member 120 may also swing about a vertical axis thereof to better receive the cooling member 200.

As shown in FIG. 2, the first guiding member 110 and the second guiding member 120 can jointly receive one end of the cooling member 200 in the second direction Y. Specifically, the first guiding member 110 is in contact with one side surface and end surface of the cooling member 200, and the second guiding member 120 is in contact with the other side surface and end surface of the cooling member 200.

Configuring the first floating adjustment assembly to be connected to the first floating member can drive the first guiding member and the second guiding member, which are disposed on the first floating member and configured to receive one end of the cooling member in the second direction, to adjust the position along the first direction. With this design, the shape of the cooling member may serve as the guide to enable rough positioning along the first direction X using the first floating adjustment mechanism, which allows automatic correction along the first direction X. This helps to alleviate the risk of side leakage caused by docking and the issue of the susceptibility of the plug mechanism to damage, thereby improving the reliability of the docking process.

With further reference to FIGs. 1 to 3, according to some embodiments of the present application, the first floating adjustment assembly 140 includes a first guide rail 150 extending along the first direction X and a first sliding table 160 in sliding fit with the first guide rail 150. One of the first guide rail 150 and the first sliding table 160 is configured to be fixedly connected to the first floating member 130.

In the example shown in FIG. 3, the first sliding table 160 is mounted on the lower part of the first floating member 130, and the first guide rail 150 is mounted on the second floating member 180. However, it will be appreciated that the first guide rail 150 may also be mounted on the lower part of the first floating member 130, and the first sliding table 160 may be mounted on the second floating member 180, as long as the first sliding table 160 can slide on the first guide rail 150. This is not limited in the present disclosure.

Configuring the first sliding table and the first guide rail that are in sliding fit with each other allows the first floating member to adjust the position along the first direction X. Thus, the shape of the cooling member may serve as the guide, allowing the first guiding member and the second guiding member to perform rough positioning along the first direction X.

According to some embodiments of the present application, the first floating adjustment assembly 140 further includes a first elastic member 170. The first elastic member 170 is disposed on the first floating member 130 and is configured to apply the return elastic force to the first floating member 130 under the condition that the first floating member 130 slides on the first guide rail 150 via the first sliding table 160.

In the example shown in FIG. 1, since the first guiding member and the second guiding member perform rough positioning along the first direction X, the first floating member 130 may move in the positive direction (i.e., rightward) along the first direction X. In this case, the first elastic member 170 applies the return elastic force to the first floating member 130 in the leftward direction.

Herein, the term "positive direction" refers to the direction indicated by the arrow on the coordinate axis in the figure, and the term "negative direction" refers to the direction opposite to the arrow on the coordinate axis in the figure.

According to some embodiments of the present application, the first elastic member 170 may include a spring plunger. However, it will be appreciated that the first elastic member 170 may also include a coil spring. This is not limited in the present disclosure.

Configuring the first elastic member allows the elastic force of the first elastic member to drive the resetting of the first floating member.

According to some embodiments of the present application, the floating docking apparatus 100 may further include a second floating adjustment mechanism. The second floating adjustment mechanism includes: a second floating member 180 and a second floating adjustment assembly 190. The other of the first guide rail 150 and the first sliding table 160 is disposed on the second floating member 180. The second floating adjustment assembly 190 is connected to the second floating member 180 and is configured to drive the second floating member 180 to adjust the position along the second direction Y.

In the example shown in FIG. 1, the second floating member 180 refers to two independent components in an "L" shape. In some embodiments, the second floating member 180 may also be an integral component.

With this design, the shape of the cooling member may serve as the guide to enable rough positioning along the second direction Y using the second floating adjustment mechanism, which allows automatic correction along the second direction Y. This helps to alleviate the risk of side leakage caused by docking and the issue of the susceptibility of the plug mechanism to damage, thereby improving the reliability of the docking process.

With continued reference to FIG. 1, in some embodiments, the second floating adjustment assembly 190 may include a second guide rail 210 and a second sliding table 220. The second guide rail 210 extends along the second direction Y. The second sliding table 220 is in sliding fit with the second guide rail 210. One of the second guide rail 210 and the second sliding table 220 is configured to be fixedly connected to the second floating member 180.

In the example shown in FIG. 1, the second sliding table 220 is mounted on the lower part of the second floating member 180, and the second guide rail 210 is mounted on the first moving member 300. However, it will be appreciated that the second guide rail 210 may also be mounted on the lower part of the second floating member 180, and the second sliding table 220 may be mounted on the first moving member 300, as long as the second sliding table 220 can slide on the second guide rail 210. This is not limited in the present disclosure.

Configuring the second sliding table and the second guide rail that are in sliding fit with each other allows the second floating member to adjust the position along the second direction Y. Thus, the shape of the cooling member may serve as the guide, allowing the first guiding member and the second guiding member to perform rough positioning along the second direction Y.

With continued reference to FIG. 1, the second floating adjustment assembly 190 may further include a second elastic member 230. The second elastic member 230 is disposed on the second floating member 180 and is configured to apply the return elastic force to the second floating member 180 under the condition that the second floating member 180 slides on the second guide rail 210 via the second sliding table 220.

In the example shown in FIG. 1, since the first guiding member and the second guiding member perform rough positioning along the second direction Y, the second floating member 180 may move in the negative direction (i.e., backward) along the second direction Y. In this case, the second elastic member 230 applies the return elastic force to the second floating member 180 in the forward direction (i.e., in the positive direction along the second direction Y).

According to some embodiments of the present application, the second elastic member 230 may include a spring plunger. However, it will be appreciated that the second elastic member 230 may also include a coil spring. This is not limited in the present disclosure.

Configuring the second elastic member allows the elastic force of the second elastic member to drive the resetting of the second floating member.

According to some embodiments of the present application, in addition to the first guide rail 150 and the first sliding table 160, the first floating adjustment assembly 140 may further include an additional third guide rail 240 and an additional third sliding table 250. The third guide rail 240 extends along the first direction X and is spaced apart from the first guide rail 150 in the first direction X. The third sliding table 250 is in sliding fit with the third guide rail 240 and is spaced apart from the first sliding table 160 in the first direction X. One of the third guide rail 240 and the third sliding table 250 is configured to be fixedly connected to the first floating member 130.

In the example shown in FIG. 1, the third sliding table 250 is mounted on the lower part of the first floating member 130, and the third guide rail 240 is mounted on the second floating member 180. It will be appreciated that the third guide rail 240 may also be mounted on the lower part of the first floating member 130, and the third sliding table 250 may be mounted on the second floating member 180, as long as the third sliding table 250 can slide on the third guide rail 240. This is not limited in the present disclosure.

Configuring the additional third sliding table and third guide rail that are in sliding fit with each other allows the first floating member to adjust the position along the first direction in a more stable manner.

With continued reference to FIG. 1, the first floating adjustment assembly 140 may further include a third elastic member 260. The first elastic member 170 and the third elastic member 260 are disposed on the first floating member 130 in a spaced manner along the first direction X and are configured to apply the return elastic force to the first floating member 130 under the condition that the first floating member 130 slides on the first guide rail 150 and the third guide rail 240 via the first sliding table 160 and the third sliding table 250, respectively.

In the example shown in FIG. 1, since the first guiding member and the second guiding member perform rough positioning along the first direction X, the first floating member 130 may move in the negative direction (i.e., leftward) along the first direction X. In this case, the third elastic member 260 applies the return elastic force to the first floating member 130 in the rightward direction.

According to some embodiments of the present application, the third elastic member 260 may include a spring plunger. However, it will be appreciated that the third elastic member 260 may also include a coil spring. This is not limited in the present disclosure.

Configuring the additional third elastic member allows the elastic force of the third elastic member to drive the resetting of the first floating member, such that the first floating member can receive the return elastic force when performing the positional adjustment in the positive or negative direction along the first direction.

With continued reference to FIG. 1, the second floating adjustment mechanism may further include a fourth guide rail 270 and a fourth sliding table 280. The fourth guide rail 270 extends along the second direction Y and is spaced apart from the second guide rail 210 in the first direction X. The fourth sliding table 280 is in sliding fit with the fourth guide rail 270 and is spaced apart from the second sliding table 220 in the first direction X. One of the fourth guide rail 270 and the fourth sliding table 280 is configured to be fixedly connected to the second floating member 180.

In the example shown in FIG. 1, the fourth sliding table 280 is mounted on the lower part of the second floating member 180, and the fourth guide rail 270 is mounted on the first moving member 300. However, it will be appreciated that the fourth guide rail 270 may also be mounted on the lower part of the second floating member 180, and the fourth sliding table 280 may be mounted on the first moving member 300, as long as the fourth sliding table 280 can slide on the fourth guide rail 270. This is not limited in the present disclosure.

Configuring the additional fourth sliding table and fourth guide rail that are in sliding fit with each other allows the second floating member to adjust the position along the second direction in a more stable manner.

With continued reference to FIG. 1, the second floating adjustment assembly 190 may further include a fourth elastic member 290. The second elastic member 230 and the fourth elastic member 290 are disposed on the second floating member 180 in a spaced manner along the first direction X and are configured to apply the return elastic force to the second floating member 180 under the condition that the second floating member 180 slides on the second guide rail 210 and the fourth guide rail 270 via the second sliding table 220 and the fourth sliding table 280, respectively.

In the example shown in FIG. 1, since the first guiding member and the second guiding member perform rough positioning along the second direction Y, the second floating member 180 may move in the negative direction (i.e., backward) along the second direction Y. In this case, the fourth elastic member 290 applies the return elastic force to the second floating member 180 in the forward direction (i.e., in the positive direction along the second direction Y).

According to some embodiments of the present application, the fourth elastic member 290 may include a spring plunger. However, it will be appreciated that the fourth elastic member 290 may also include a coil spring. This is not limited in the present disclosure.

Configuring the additional fourth elastic member allows the elastic force of the fourth elastic member to drive the resetting of the second floating member, such that the second floating member can receive the balanced return elastic force on both sides when performing positional adjustment along the second direction.

With continued reference to FIG. 1, the floating docking apparatus 100 may further include a first movement adjustment mechanism. The first movement adjustment mechanism includes a first moving member 300, a first movement adjustment assembly 310, and a first driving mechanism 320. The other of the second guide rail 210 and the second sliding table 220 and/or the other of the fourth guide rail 270 and the fourth sliding table 280 are disposed on the first moving member 300. The first movement adjustment assembly 310 is connected to the first moving member 300 and is configured to drive the first moving member 300 to adjust the position along the second direction Y. The first driving mechanism 320 is configured to be connected to the first moving member 300 so as to drive the first moving member 300 to translate along the second direction Y.

In the example shown in FIG. 1, the middle of the first moving member 300 may be provided with a vacant part, and the first driving mechanism 320 may be arranged in the vacant part and configured to drive the first moving member 300 to translate along the second direction Y.

With this design, the first driving mechanism can drive the first moving member to translate along the second direction, which allows the first guiding member and the second guiding member to rapidly move toward the cooling member along the second direction, thereby facilitating subsequent rough positioning along the first direction and the second direction.

With continued reference to FIG. 2, the first movement adjustment assembly 310 may include a fifth guide rail 330 and a fifth sliding table 340. The fifth guide rail 330 extends along the second direction Y. The fifth sliding table 340 is in sliding fit with the fifth guide rail 330. One of the fifth guide rail 330 and the fifth sliding table 340 is configured to be fixedly connected to the first moving member 300.

In the example shown in FIG. 2, the fifth sliding table 340 is mounted on the lower part of the first moving member 300, and the fifth guide rail 330 is mounted on the second moving member 380. However, it will be appreciated that the fifth guide rail 330 may also be mounted on the lower part of the first moving member 300, and the fifth sliding table 340 may be mounted on the second moving member 380, as long as the fifth sliding table 340 can slide on the fifth guide rail 330. This is not limited in the present disclosure.

Configuring the fifth sliding table and the fifth guide rail that are in sliding fit with each other allows the first moving member to adjust the position along the second direction.

With continued reference to FIG. 2, the first driving mechanism 320 may include a cylinder 350. The cylinder 350 is provided with a guide rod 360. The first moving member 300 includes a groove 370 for engaging with the head of the guide rod 360 so as to drive the first moving member 300 to translate along the second direction Y under the condition that the guide rod 360 extends or retracts.

According to some embodiments of the present application, the first driving mechanism 320 may also include other types of mechanisms that perform linear motion, such as a servo motor or a lead screw.

By providing the groove on the first moving member for engaging with the head of the guide rod, this shape-fitting engagement mode allows the motion of the guide rod to drive the first moving member to translate along the second direction, thereby driving the first guiding member and the second guiding member to translate along the second direction.

With continued reference to FIG. 1, the floating docking apparatus 100 may further include a second movement adjustment mechanism. The second movement adjustment mechanism includes a second moving member 380 and a second movement adjustment assembly 390. The first driving mechanism 320 and the other of the fifth guide rail 330 and the fifth sliding table 340 are disposed on the second moving member 380. The second movement adjustment assembly 390 is connected to the second moving member 380 and is configured to drive the second moving member 380 to adjust the position along the first direction X.

In the example shown in FIG. 1, the fifth guide rail 330 and the first driving mechanism 320 are disposed on the second moving member 380. In some embodiments, the second moving member 380 may include a rectangular plate member.

Configuring the second movement adjustment assembly to be connected to the second moving member can drive the second moving member to adjust the position along the first direction. With this design, the first guiding member and the second guiding member can rapidly move toward the cooling member along the first direction, thereby facilitating further movement toward the cooling member along the second direction.

With continued reference to FIG. 1, the second movement adjustment assembly 390 may include a sixth guide rail 385 and a sixth sliding table 395. The sixth guide rail 385 extends along the first direction X. The sixth sliding table 395 is in sliding fit with the sixth guide rail 385. The sixth sliding table 395 is configured to be fixedly connected to the second moving member 380.

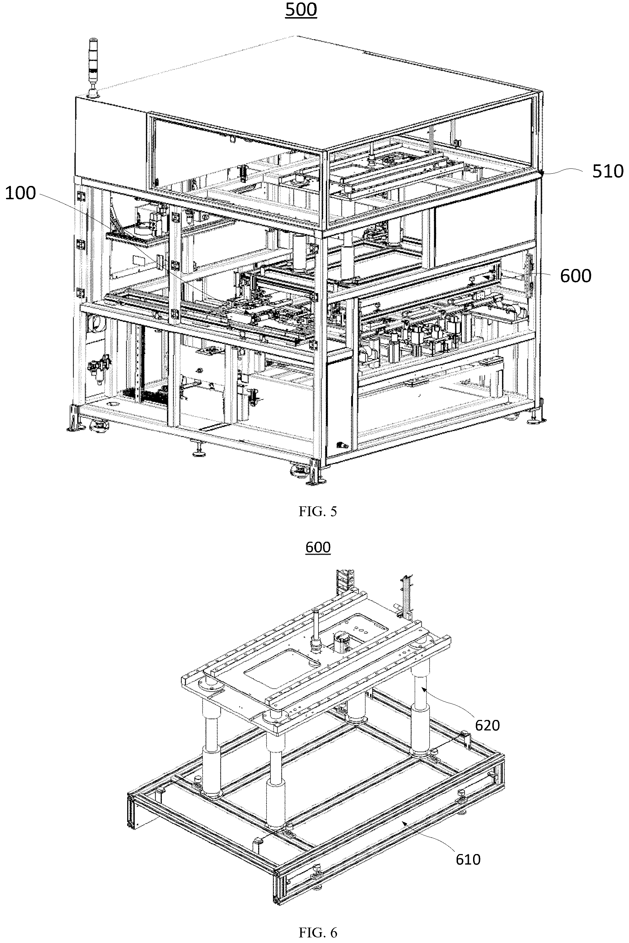

In the example shown in FIG. 1, the sixth sliding table 395 is mounted on the lower part of the second moving member 380, and the sixth guide rail 385 may be mounted on a fixed support 510 (refer to FIG. 5) of the air tightness detection device 500 of the cooling member.

Configuring the sixth sliding table and the sixth guide rail that are in sliding fit with each other allows the second moving member to adjust the position along the first direction.

With continued reference to FIG. 3, a first stopping member 375 is disposed on the second moving member 380. A second stopping member 365 is disposed on the sixth guide rail 385. The first stopping member 375 is configured to cooperate with the second stopping member 365 to limit the motion position of the sixth sliding table 395.

In the example shown in FIG. 3, the first stopping member 375 may include a knob plunger, and the second stopping member 365 may include a fixed pin. However, it will be appreciated that the first stopping member 375 and the second stopping member 365 may take other stopping forms. This is not limited in the present disclosure.

With this design, the second moving member can adjust the position along the first direction and then be fixed.

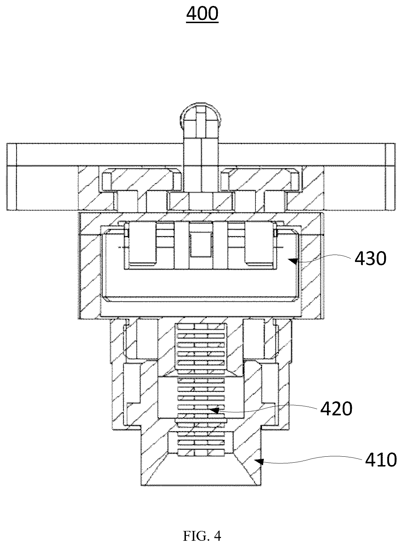

Referring to FIG. 4 and further referring to FIG. 3, FIG. 4 is a schematic cross-sectional view of a plug mechanism 400 according to some embodiments of the present application. The floating docking apparatus 100 may further include a plug mechanism 400 for docking with the communication port. The plug mechanism 400 is movably connected to the first floating member 130 to enable the positional adjustment of the plug mechanism 400 relative to the first floating member 130 along the third direction Z. The third direction Z intersects with the first direction X and the second direction Y, respectively.

As shown in the figure, the third direction Z is the thickness direction of the cooling member 200.

In the example shown in FIG. 4, the plug mechanism 400 may include a communication port guiding sleeve 410, a spring 420, and a plugging cylinder 430. In some embodiments, the communication port guiding sleeve 410 is provided with a chamfered slope to enable more accurate and faster docking with the communication port. The spring 420 is configured to allow the communication port guiding sleeve 410 to float up and down along the third direction Z, so as to better accommodate the positional error of the communication port.

According to some embodiments of the present application, after the first guiding member and the second guiding member perform rough positioning along the first direction and the second direction, the plug mechanism 400 may be lowered to align the plug mechanism 400 with the communication port of the cooling member 200, thereby preparing for the next inflation step.

With this design, the plug mechanism can adjust the position along the third direction after the rough positioning along the first direction and the second direction, so as to achieve the docking with the communication port of the cooling member.

With continued reference to FIG. 3, the first guiding member 110 includes a first side wall facing the second guiding member 120 and a second side wall facing away from the second guiding member 120. The first side wall includes a first inclined portion 355 inclined relative to the second side wall. The spacing between the first inclined portion 355 and the second side wall in the first direction X gradually decreases in the direction away from the floating docking apparatus 100 along the second direction Y. In some embodiments, the second guiding member 120 includes a third side wall facing the first guiding member 110 and a fourth side wall facing away from the first guiding member 110. The third side wall includes a second inclined portion 345 inclined relative to the fourth side wall. The spacing between the second inclined portion 345 and the fourth side wall in the first direction X gradually decreases in the direction away from the floating docking apparatus 100 along the second direction Y.

According to some embodiments of the present application, adjusting the inclination angle and the length of the inclined surface of the first inclined portion 355 and/or the second inclined portion 345 enables the first guiding member 110 and the second guiding member 120 to receive the cooling member 200 in a more stable manner.

By configuring the portion of the first guiding member and/or the second guiding member for receiving the cooling member to include an inclined portion, the likelihood of hard collisions occurring when the first guiding member and/or the second guiding member receive the cooling member can be reduced.

According to some embodiments of the present application, referring to FIG. 1, the present application provides a floating docking apparatus 100. The floating docking apparatus 100 is applied to the cooling member 200. The floating docking apparatus 100 includes a guide assembly and a first floating adjustment mechanism. The guide assembly includes a first guiding member 110 and a second guiding member 120. The first guiding member 110 and the second guiding member 120 are disposed opposite to each other in the first direction X for receiving one end of the cooling member 200 in the second direction Y and positioning the communication port of the cooling member 200. The second direction Y intersects with the first direction X. The first floating adjustment mechanism includes a first floating member 130 and a first floating adjustment assembly 140. The first floating member 130 extends along the first direction X, and the first guiding member 110 and the second guiding member 120 are disposed on both ends of the first floating member 130 opposite to each other in the first direction X, respectively. In addition, the first floating adjustment assembly 140 is connected to the first floating member 130 and is configured to drive the first floating member 130 to adjust the position along the first direction X. The floating docking apparatus 100 may further include a second floating adjustment mechanism. The second floating adjustment mechanism includes: a second floating member 180 and a second floating adjustment assembly 190. The other of the first guide rail 150 and the first sliding table 160 is disposed on the second floating member 180. The second floating adjustment assembly 190 is connected to the second floating member 180 and is configured to drive the second floating member 180 to adjust the position along the second direction Y.

Referring to FIG. 5, FIG. 5 is a schematic structural diagram of an air tightness detection device 500 according to some embodiments of the present application. The air tightness detection device 500 of the cooling member may include a fixed support 510 and a floating docking apparatus 100. The floating docking apparatus 100 is disposed on the fixed support 510.

According to some embodiments of the present application, the fixed support 510 may form an accommodating space in which the cooling member 200 to be tested can be placed. According to some embodiments of the present application, the air tightness detection device 500 may further include an air pressure supply unit and a detection unit. In some embodiments, the air pressure supply unit inflates the communication port of the cooling member, such that the pressure difference between the inside and outside of the inner cavity of the cooling member 200 to be tested reaches the required test pressure. In some embodiments, the detection unit is configured to detect the pressure change in the inner cavity of the cooling member 200 over a preset period.

The air tightness detection device 500 uses the floating docking apparatus 100 according to the above embodiments to dock with the communication port of the cooling member. The specific construction and function of the floating docking apparatus 100 in the air tightness detection device 500 have been elaborated above.

Referring to FIG. 6 and further referring to FIG. 5, FIG. 6 is a schematic structural diagram of a heat preservation mechanism 600 according to some embodiments of the present application. The air tightness detection device 500 may further include a heat preservation mechanism 600. The heat preservation mechanism 600 includes a heat preservation cover 610 and a lifting assembly 620. The heat preservation cover 610 is configured to cover the communication port of the cooling member 200 and the plug mechanism 400. The lifting assembly 620 is disposed on the fixed support 510 and is fixedly connected to the heat preservation cover 610 for lifting and lowering the heat preservation cover 610.

According to some embodiments of the present application, the heat preservation cover 610 may automatically descend when the cooling member 200 to be tested enters the air tightness detection device 500, and automatically ascend after the testing is completed.

According to some embodiments of the present application, the lifting assembly 620 may include at least one of a guide rod, a linear bearing, a lead screw nut, and a servo motor.

The arrangement of the heat preservation mechanism can increase the likelihood that the air tightness testing process is not affected by external airflow changes.

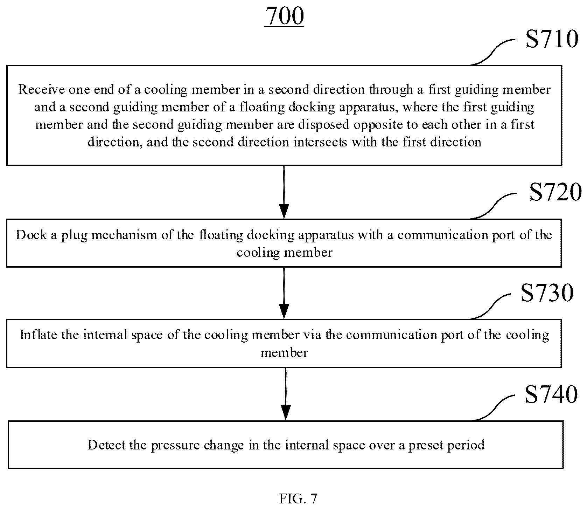

Referring to FIG. 7, FIG. 7 is a flowchart of an air tightness detection method 700 according to some embodiments of the present application. The method 700 includes steps S710 to S750.

In step S710, one end of a cooling member 200 in the second direction Y is received through a first guiding member 110 and a second guiding member 120 of the floating docking apparatus 100, where the first guiding member 110 and the second guiding member 120 are disposed opposite to each other in the first direction X, and the second direction Y intersects with the first direction X.

In step S720, a plug mechanism 400 of the floating docking apparatus 100 is docked with a communication port of the cooling member 200.

In step S730, the internal space of the cooling member 200 is inflated via the communication port of the cooling member 200.

In step S740, the pressure change in the internal space is detected over a preset period.

In the above step S740, the pressure change in the internal space is detected after the pressure in the internal space is stabilized. In some embodiments, after step S740, the internal space may also be vented.

In the above step S710, the shape of the cooling member serves as a guide, and after rough positioning, the plug mechanism is docked with the communication port. This helps to alleviate the risk of side leakage caused by docking and the issue of the susceptibility of the plug mechanism to damage, thereby improving the reliability of the docking process.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments or make equivalent substitutions for some or all of the technical features; however, these modifications or substitutions do not make the essence of the corresponding technical solutions deviate from the spirit and scope of the technical solutions in the embodiments of the present application, and these modifications or substitutions shall all fall within the scope of claims and specification of the present application. In particular, the technical features mentioned in the embodiments may be combined in any manner as long as there are no structural conflicts. The present application is not limited to the specific embodiments disclosed herein, but encompasses all technical solutions falling within the scope of the claims.

## Claims

1. A floating docking apparatus (100), applied to a cooling member (200), wherein the floating docking apparatus (100) comprises:
a guide assembly, comprising a first guiding member (110) and a second guiding member (120), wherein the first guiding member (110) and the second guiding member (120) are disposed opposite to each other in a first direction (X) for receiving one end of the cooling member (200) in a second direction (Y) and positioning a communication port of the cooling member (200), and the second direction (Y) intersects with the first direction (X); and
a first floating adjustment mechanism, comprising:
a first floating member (130) extending along the first direction (X), wherein the first guiding member (110) and the second guiding member (120) are disposed on both ends of the first floating member (130) opposite to each other in the first direction (X), respectively; and
a first floating adjustment assembly (140), wherein the first floating adjustment assembly (140) is connected to the first floating member (130) and is configured to drive the first floating member (130) to adjust a position along the first direction (X).

2. The floating docking apparatus (100) according to claim 1, wherein the first floating adjustment assembly (140) comprises:
a first guide rail (150) extending along the first direction (X); and
a first sliding table (160) in sliding fit with the first guide rail (150),
wherein one of the first guide rail (150) and the first sliding table (160) is configured to be fixedly connected to the first floating member (130).

3. The floating docking apparatus (100) according to claim 2, wherein the first floating adjustment assembly (140) further comprises:
a first elastic member (170), disposed on the first floating member (130) and configured to apply a return elastic force to the first floating member (130) under a condition that the first floating member (130) slides on the first guide rail (150) via the first sliding table (160).

4. The floating docking apparatus (100) according to claim 2 or 3, wherein the floating docking apparatus (100) further comprises a second floating adjustment mechanism, and the second floating adjustment mechanism comprises:
a second floating member (180), wherein the other of the first guide rail (150) and the first sliding table (160) is disposed on the second floating member (180); and
a second floating adjustment assembly (190), wherein the second floating adjustment assembly (190) is connected to the second floating member (180) and is configured to drive the second floating member (180) to adjust a position along the second direction (Y).

5. The floating docking apparatus (100) according to claim 4, wherein the second floating adjustment assembly (190) comprises:
a second guide rail (210) extending along the second direction (Y); and
a second sliding table (220) in sliding fit with the second guide rail (210),
wherein one of the second guide rail (210) and the second sliding table (220) is configured to be fixedly connected to the second floating member (180).

6. The floating docking apparatus (100) according to claim 5, wherein the second floating adjustment assembly (190) further comprises:
a second elastic member (230), wherein the second elastic member (230) is disposed on the second floating member (180) and is configured to apply a return elastic force to the second floating member (180) under a condition that the second floating member (180) slides on the second guide rail (210) via the second sliding table (220).

7. The floating docking apparatus (100) according to claim 3, wherein the first floating adjustment assembly (140) further comprises:
a third guide rail (240) extending along the first direction (X) and spaced apart from the first guide rail (150) in the first direction (X); and
a third sliding table (250) in sliding fit with the third guide rail (240) and spaced apart from the first sliding table (160) in the first direction (X),
wherein one of the third guide rail (240) and the third sliding table (250) is configured to be fixedly connected to the first floating member (130).

8. The floating docking apparatus (100) according to claim 7, wherein the first floating adjustment assembly (140) further comprises:
a third elastic member (260), wherein the first elastic member (170) and the third elastic member (260) are disposed on the first floating member (130) in a spaced manner along the first direction (X) and are configured to apply a return elastic force to the first floating member (130) under a condition that the first floating member (130) slides on the first guide rail (150) and the third guide rail (240) via the first sliding table (160) and the third sliding table (250), respectively.

9. The floating docking apparatus (100) according to claim 6, wherein the second floating adjustment mechanism further comprises:
a fourth guide rail (270) extending along the second direction (Y) and spaced apart from the second guide rail (210) in the first direction (X); and
a fourth sliding table (280) in sliding fit with the fourth guide rail (270) and spaced apart from the second sliding table (220) in the first direction (X),
wherein one of the fourth guide rail (270) and the fourth sliding table (280) is configured to be fixedly connected to the second floating member (180).

10. The floating docking apparatus (100) according to claim 9, wherein the second floating adjustment assembly (190) further comprises:
a fourth elastic member (290), wherein the second elastic member (230) and the fourth elastic member (290) are disposed on the second floating member (180) in a spaced manner along the first direction (X) and are configured to apply a return elastic force to the second floating member (180) under a condition that the second floating member (180) slides on the second guide rail (210) and the fourth guide rail (270) via the second sliding table (220) and the fourth sliding table (280), respectively.

11. The floating docking apparatus (100) according to claim 9, wherein the floating docking apparatus (100) further comprises:
a first movement adjustment mechanism, comprising:
a first moving member (300), wherein the other of the second guide rail (210) and the second sliding table (220) and/or the other of the fourth guide rail (270) and the fourth sliding table (280) are disposed on the first moving member (300); and
a first movement adjustment assembly (310), wherein the first movement adjustment assembly (310) is connected to the first moving member (300) and is configured to drive the first moving member (300) to adjust a position along the second direction (Y); and
a first driving mechanism (320), configured to be connected to the first moving member (300) so as to drive the first moving member (300) to translate along the second direction (Y).

12. The floating docking apparatus (100) according to claim 11, wherein the first movement adjustment assembly (310) comprises:
a fifth guide rail (330) extending along the second direction (Y); and
a fifth sliding table (340) in sliding fit with the fifth guide rail (330),
wherein one of the fifth guide rail (330) and the fifth sliding table (340) is configured to be fixedly connected to the first moving member (300).

13. The floating docking apparatus (100) according to claim 11, wherein the first driving mechanism (320) comprises a cylinder (350), and the cylinder (350) is provided with a guide rod (360), wherein the first moving member (300) comprises a groove (370) for engaging with a head of the guide rod (360) so as to drive the first moving member (300) to translate along the second direction (Y) under a condition that the guide rod (360) extends or retracts.

14. The floating docking apparatus (100) according to claim 12, wherein the floating docking apparatus (100) further comprises a second movement adjustment mechanism, and the second movement adjustment mechanism comprises:
a second moving member (380), wherein the first driving mechanism (320) and the other of the fifth guide rail (330) and the fifth sliding table (340) are disposed on the second moving member (380); and
a second movement adjustment assembly (390), wherein the second movement adjustment assembly (390) is connected to the second moving member (380) and is configured to drive the second moving member (380) to adjust a position along the first direction (X).

15. The floating docking apparatus (100) according to claim 14, wherein the second movement adjustment assembly (390) comprises:
a sixth guide rail (385) extending along the first direction (X); and
a sixth sliding table (395) in sliding fit with the sixth guide rail (385),
wherein the sixth sliding table (395) is configured to be fixedly connected to the second moving member (380).

16. The floating docking apparatus (100) according to claim 15, wherein a first stopping member (375) is disposed on the second moving member (380), and a second stopping member (365) is disposed on the sixth guide rail (385), wherein the first stopping member (375) is configured to cooperate with the second stopping member (365) to limit a motion position of the sixth sliding table (395).

17. The floating docking apparatus (100) according to any one of claims 1 to 16, wherein the floating docking apparatus (100) further comprises:
a plug mechanism (400), configured to dock with the communication port of the cooling member (200), wherein the plug mechanism (400) is movably connected to the first floating member (130) to enable positional adjustment of the plug mechanism (400) relative to the first floating member (130) along a third direction (Z), wherein the third direction (Z) intersects with the first direction (X) and the second direction (Y), respectively.

18. The floating docking apparatus (100) according to any one of claims 1 to 17, wherein the first guiding member (110) comprises a first side wall facing the second guiding member (120) and a second side wall facing away from the second guiding member (120), the first side wall comprises a first inclined portion (355) inclined relative to the second side wall, and a spacing between the first inclined portion (355) and the second side wall in the first direction (X) gradually decreases in a direction away from the floating docking apparatus (100) along the second direction (Y); and/or
the second guiding member (120) comprises a third side wall facing the first guiding member (110) and a fourth side wall facing away from the first guiding member (110), the third side wall comprises a second inclined portion (345) inclined relative to the fourth side wall, and a spacing between the second inclined portion (345) and the fourth side wall in the first direction (X) gradually decreases in the direction away from the floating docking apparatus (100) along the second direction (Y).

19. An air tightness detection device (500), wherein the air tightness detection device (500) comprises:
a fixed support (510); and
the floating docking apparatus (100) according to any one of claims 1 to 18, wherein the floating docking apparatus (100) is disposed on the fixed support (510).

20. The air tightness detection device (500) according to claim 19, wherein the air tightness detection device (500) further comprises a heat preservation mechanism (600), and the heat preservation mechanism (600) comprises:
a heat preservation cover (610), configured to cover the communication port of the cooling member (200) and the plug mechanism (400) of the floating docking apparatus (100); and
a lifting assembly (620), disposed on the fixed support (510) and fixedly connected to the heat preservation cover (610) for lifting and lowering the heat preservation cover (610).

21. An air tightness detection method for detecting air tightness of a cooling member (200), wherein the method comprises:
receiving one end of the cooling member (200) in a second direction (Y) through a first guiding member (110) and a second guiding member (120) of a floating docking apparatus (100), wherein the first guiding member (110) and the second guiding member (120) are disposed opposite to each other in a first direction (X), and the second direction (Y) intersects with the first direction (X);
docking a plug mechanism (400) of the floating docking apparatus (100) with a communication port of the cooling member (200);
inflating an internal space of the cooling member (200) via the communication port of the cooling member (200); and
detecting a pressure change in the internal space over a preset period.
